# EUROPEAN PATENT APPLICATION

(11) **EP 1 502 725 A1**
(43) Date of publication of application: **02.02.2005**
(21) Application number: 03719217.6
(22) Date of filing: 25.04.2003
(51) Int. Cl.: B29C 55/02, C08J 5/18

(54) **HIGH-STRENGTH FILM OF POLYHYDROXYALKANOIC ACID AND PROCESS FOR PRODUCING THE SAME**

(30) Priority: 25.04.2002 JP 2002123347
(71) Applicant: Riken, Wako-shi, Saitama 351-0198 (JP); Akebono Research and Development Centre Ltd., Hanyu-shi, Saitama 348-8511 (JP)
(72) Inventor: IWATA, Tadahisa C/O RIKEN, Wako-shi, Saitama 351-0198 (JP); DOI, Yoshiharu C/O RIKEN, Wako-shi, Saitama 351-0198 (JP); AOYAGI,Y AKEBONO RESEARCH & DEVELOPMENT CENTRE LTD, Hanyu-shi, Saitama 348-8511 (JP)
(74) Representative: Gervasi, Gemma, Dr.
(86) International application number: PCT/JP2003/005376
(87) International publication number: WO 2003/091002

(57) **Abstract**

The present invention relates to a process for producing a film of polyhydroxyalkanoic acid, comprising: partially melting and hot drawing an unoriented polyhydroxyalkanoic acid film; and further drawing the obtained hot-drawn film to obtain a two-stage drawn film. The present invention provides a PHA film having sufficient strength and flexibility, and having biodegradability and biocompatibility, and a process for producing the film easily and with good reproducibility.

## Description

### Technical Field

The present invention relates to a film made of polyhydroxyalkanoic acid as a rawmaterial and a process for producing the film. The present invention more specifically relates to: a novel process for producing ahigh-strength film having high breaking strength and high elongation to break; and a novel high-strength film obtained through the process for producing the same.

### Background Art

Many microorganisms are known to synthesize poly(3-hydroxybutanoicacid) (hereinafter also referredto as "PHB") as one of polyhydroxyalkanoic acids (hereinafter also referred to as "PHAs") as an intracellular reserve substance which is accumulated in a form of granules in cytoplasm (Anderson, A. J. and Dawes, E. A., Microbiol. Rev., 54: 450-472 (1990)). PHB separated from microbial cells has recently attracted attention as a thermoplastic resin having biodegradability and biocompatibility (Doi, Y., In: Microbial polyesters, VCH, New York (1990)), and its use for various molded products such as films or fibers has been studied.

Processes for producing a film from PHB as a raw material hitherto have been studied, and such processes employ PHB having a relatively low molecular weight (number average molecular weight of about 300,000) produced through biosynthesis of a wild type PHB-producing microorganism. Such a film obtained from PHB having a number average molecular weight of about 300, 000 has disadvantages in that the film deteriorates over time due to secondary crystallization at room temperatures and the film cannot be subjected to fabrication such as drawing.

Meanwhile, the inventors of the present invention have attempted at enhancing a molecular weight of PHB using genetically modified Escherichia coli of a poly(3-hydroxybutanoic acid) synthesis gene, and have found out that PHB having a remarkably enhanced molecular weight can be obtained by shifting a pH of a culture medium to an acidic side as culture conditions (JP 10-176070 A).

A film of PHB having a number average molecular weight of 500, 000 or more produced through biosynthesis using the geneticallymodified Escherichia coli can be drawn to 2-fold or more with good reproducibility through drawing under load in a silicone oil bath (155 to 180°C).

Further, the inventors of the present invention have found out that heat treatment on the same film in an autoclave (60 to 170°C) for 2 hours can suppress deterioration thereof over time. That is, the inventors of the present invention have found out that drawing of and heat treatment on the film can enhance physical properties of the film obtained.

Further, the inventors of the present invention have found out that a high-strength and fabricable film which is stable at normal temperatures can be obtained by: quenching a molten film of polyhydroxyalkanoic acid to its glass transition temperature + 10°C or lower to solidify and form an amorphous film; cold-drawing the amorphous film; and subjecting the amorphous film to heat treatment under tension, regardless of molecular weights and compositions (whether a homopolymer or a copolymer) of PHAs varying depending on origins such as a wild type PHAs-producingmicroorganism product, a genetically modified PHAs-producing microorganism product, and a chemical product (Japanese Patent Application No. 2002-044513).

However, developments of a high-strength film having a high elongation to break and a high breaking strength and a process for producing the same have been desired.

### Disclosure of the Invention

An object of the present invention is to provide: a process for easily producing a biodegradable high-strength film of PHAs having a high breaking strength and a high elongation to break with good reproducibility; and a film obtained through the process.

The inventors of the present invention have found through intensive studies that the above-described object can be attained by partially melting and hot drawing an unoriented PHA film and subjecting the film to second-stage drawing, and thus, have completed the present invention.

That is, the gist of the present invention is as follows.
(1) A process for producing a film of polyhydroxyalkanoic acid, comprising: partially melting and hot drawing an unoriented polyhydroxyalkanoic acid film; and further drawing the obtained hot-drawn film to obtain a two-stage drawn film.
(2) A process for producing a film of polyhydroxyalkanoic acid according to (1), wherein the partially melting and hot drawing is carried out at a temperature from a melting point - 25°C of polyhydroxyalkanoic acid or more to the melting point of polyhydroxyalkanoic acid or less, and at a draw ratio of 2-fold or more.
(3) A process for producing a film of polyhydroxyalkanoic acid according to (1) or (2), wherein the drawing in the second-stage is carried out at a temperature of the partially melting and hot drawing step or less.
(4) A process for producing a film of polyhydroxyalkanoic acid according to any one of (1) to (3), wherein the drawing in the second-stage is carried out at a temperature of the partially melting and hot drawing step - 30°C or lower.
(5) A process for producing a film of polyhydroxyalkanoic acid according to any one of (1) to (4), wherein the drawing in the second-stage is carried out at a draw ratio of 1.25-fold or more.
(6) A process for producing a film of polyhydroxyalkanoic acid according to any one of (1) to (5), further comprising subjecting the two-stage drawn film to heat treatment at 60 to 170°C.
(7). A process for producing a film of polyhydroxyalkanoic acid according to any one of (1) to (6), wherein the polyhydroxyalkanoic acid is poly(3-hydroxybutanoic acid).
(8) A process for producing a film of polyhydroxyalkanoic acid according to (7), wherein the poly(3-hydroxybutanoic acid) has a number average molecular weight of 500,000 or more.
(9) A film produced through the process for producing a film of polyhydroxyalkanoic acid according to any one of (1) to (8) and made of polyhydroxyalkanoic acid having a number average molecular weight of 500,000 or more, the film having a breaking strength of 280 MPa or more and an elongation to break of 25% or more.
(10) A film according to (9), wherein the polyhydroxyalkanoic acid is oriented in one direction in the film and part of molecular chains of the polyhydroxyalkanoic acid has a planar zigzag structure.

### Brief Description of the Drawings

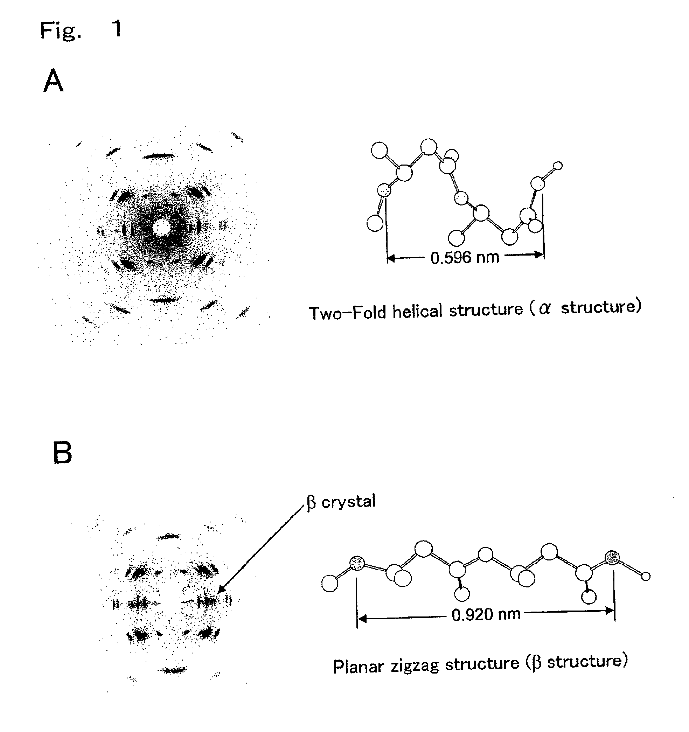

Fig. 1A is a schematic diagram of a molecular structure of a film in Comparative Example 2 and an X-ray photograph of the film. Fib. 1B is a schematic diagram of a molecular structure of part of a film in Example 5 and an X-ray photograph of the film.

### Best Mode for carrying out the Invention

Hereinafter, embodiments of the present invention will be described.

### (1) Process for producing film of the present invention

A production process of the present invention has such a feature that the process involves partially melting and hot drawing an unoriented PHA film and further drawing the obtained hot-drawn film, to thereby obtain a two-stage drawn film.

### (i) PHAs having number average molecular weight (Mn) of 500,000 or more employed in the present invention

In a production process of the present invention, PHAs each having a number average molecular weight of 500,000 or more are employed as film forming materials. A preferable example of PHAs is poly(3-hydroxybutanoic acid) (PHB). Processes for obtaining PHB include fermentation synthesis and chemical synthesis in general. The chemical synthesis is a process for chemically synthesizing PHB following a usual organic synthesis technique and results in a mixture (racemate) of poly[(R)-3-hydroxybutanoic acid] and poly[(S)-3-hydroxybutanoic acid]. In contrast, the fermentation synthesis involves culturing a microorganism capable of producing PHB and recovering PHB accumulated in the microbial cells. PHB produced through the fermentation synthesis is a poly[(R)-3-hydroxybutanoic acid] homopolymer.

In the present invention, the fermentation synthesis producing poly[(R)-3-hydroxybutanoic acid] alone is preferable in terms of physical properties of the obtained PHB. A microorganism that can be used for the fermentation synthesis is not particularly limited as long is it is a microorganism capable of producing high molecular weight PHB. PHB is known to accumulate in microbial cells of 60 or more species of naturally occurring microorganisms including those belonging to the genus Alcaligenes such as Ralstonia eutropha, Alcaligenes latus, and Alcaligenes faecalis. In particular, examples of microorganisms for producing high molecular weight PHB having a number average molecular weight of 500, 000 or more employed in the present invention include strains of microbial species belonging to the genus Methylobacterium, more specifically, Methylobacterium extorquens ATCC55366 (Bourque, D. et al., Appl. Microbiol. Biotechnol. (1995)). Those strains are commercially available from American Type Culture Collection (ATCC).

In the fermentation synthesis, the microorganisms are generally cultured in a usual medium containing a carbon source, a nitrogen source, inorganic ions, and if necessary, other organic components, to thereby accumulate PHB in the microbial cells. PHB can be collected from the microbial cells through processes including extraction with an organic solvent such as chloroform, and degradation of the microbial components with an enzyme such as lysozyme followed by collecting PHB granules by filtration.

Further, examples of the mode of the fermentation synthesis include a process for culturing a microorganism transformed by introduction of a recombinant DNA containing a PHB synthesis gene and collecting PHB produced in the microbial cells. This process differs from culturing of Ralstonia eutropha or the like itself. That is, the microorganisms transformed by introduction of a recombinant DNA have no PHB degrading enzyme in the microbial cells, and PHB having remarkably high molecular weight can be accumulated, which is particularly preferable in the present invention.

In PHB fermentation synthesis employing the tranformant, a recombinant DNA containing a PHB synthesis gene (hereinafter also referred to as "phbCAB") of Ralstonia eutropha is introduced into a host. Examples of the host include microbial species belonging to Escherichia, specifically a strain of Escherichia coli. Specific examples thereof include Escherichia coli XL1-Blue, JM109, DH5α, and BW. The recombinant DNA containing the phbCAB can be obtained by inserting the phbCAB into a plasmid vector, a phage vector, or the like. Examples of such vectors include plasmid vectors such as pSYL, pUC, pBluescript, pJRD, and pGEM. The recombinant DNA can be introduced into the host through a conventional process.

Examples of such a transformant include transformant Escherichia coli XL1-Blue (pSYL105) obtained by introducing a plasmid pSYL105 containing phbCAB into Escherichia coli XL1-Blue used in examples described below. The Escherichia coli XL1-Blue (pSYL105) can be prepared following a process disclosed in JP 10-176070 A.

Further, the transformant Escherichia coli XL1-Blue (pSYL105) is available from Stratagene Cloning Systems, Inc. (11011 North Torrey Pines Road, La Jolla, CA 92037, USA).

A transformant is cultured in an appropriate medium, and PHB is accumulated in the microbial cells. Examples of a medium used include a usual medium containing a carbon source, a nitrogen source, inorganic ions, and if necessary, other organic components. When Escherichia coli is used, glucose or the like is used as a carbon source, and yeast extract, tryptone, or the like derived from natural substances is used as a nitrogen source. In addition, the medium may contain an inorganic nitrogen compound or the like such as an ammonium salt. The culture is preferably controlled under aerobic conditions for 12 to 20 hours, at a culture temperature of 30 to 37°C, and at pH of 6.0 to 8.0. PHB can be collected from the microbial cells through processes including extraction with an organic solvent such as chloroform, and degradation of the microbial components with an enzyme such as lysozyme followed by collecting PHB granules by filtration. To be specific, PHB can be extracted from dried microbial cells, which are separated and collected from a culture solution, with an appropriate poor solvent followed by precipitating using a precipitant.

PHB having a remarkably higher molecular weight than that obtained through conventional culture of Ralstonia eutropha can be obtained through a process employing a transformant having a recombinant DNA introduced. High molecular weight PHB used in the preset invention has a number average molecular weight of 500, 000 or more, preferably 1, 000, 000 or more, andmore preferably 2,000,000 or more. Too low a molecular weight impairs drawing at high ratios and provides a film with insufficient strength. An upper limit of the number average molecular weight is not particularly limited, but is preferably 5,000,000 or less, particularly preferably 1,000,000 or less from the viewpoints of availability and moldability.

A film molding material in the present invention may contain as required various additives usually used for forming a film such as a lubricant, an ultraviolet absorbing agent, a weathering agent, an antistatic agent, an antioxidant, a heat stabilizer, a nucleus agent, a fluidity-improving agent, and a colorant, in addition to the above-described PHAs.

### (ii) Drawing step

In the process of the present invention, a hot-drawn film is produced by partially melting and hot drawing an unoriented film, which is obtained by: preparing PHAs each having a number average molecular weight of 500,000 or more through the above-mentioned process; and forming a film thereof through a usual process for film formation. The term "partially melting" as used herein refers to melting under heating to a hardness allowing drawing, without completely melting the film. Processes for melting, partially melting, and hot drawing are not particularly limited, and any technique of melting, partially melting, and hot drawing a usual plastic film can be employed. A preferable process is performed by: forming a film having a thickness of about 20 to about 100 µm through solvent casting; partially melting the film under heating by fixing the film onto a drawing machine; and drawing the film in one direction under tension. A partially melting and hot drawing step can be carried out using an oil bath or the like for heating at a preferable temperature between a melting point of PHAs - 25°C or higher and the melting point of PHAs or less. The melting point of PHAs used in the process of the present invention is preferably 170°C or higher, more preferably 175 to 180°C. To be specific, the partially melting and hot drawing step can be preferably carried out at 155 to 180°C. When the film is immersed in an oil bath or the like, the film usually softens immediately and thus can be drawn by using a weight or the like. However, immersion of the film in an oil bath or the like for a long period of time causes complete melting of the film. Thus, the film is preferably immersed for 1 to 3 seconds, drawn, and then quickly taken out of the oil bath or the like. Further, the film may be drawn in one direction (uniaxial orientation) or in two directions (biaxial orientation), but the film is suitably drawn in one direction in the present invention.

A draw ratio is 2-fold or more, preferably 2- to 10-fold, particularly preferably 4- to 10-fold. Drawing is not easy through a conventional process and a film breaks immediately at a draw ratio of less than 2-fold. The process of the present invention employs high molecular weight PHB and allows drawing at such high draw ratios, thereby producing a film having high strength and flexibility. Too low a draw ratio undesirably lowers crystalline orientation of PHB and reduces the strength of the film. Too high a draw ratio causes breaking of the film.

In the process of the present invention, first-stage drawing is carried out, and subsequently second-stage drawing is carried out. The second-stage drawing preferably is performed by drawing of a drawn film obtained through the first-stage drawing while fixing the drawn film onto a drawing machine. The second-stage drawing can be carried out at preferably a temperature of the partially melting and hot drawing step or lower, more preferably a temperature of the partially melting and hot drawing step - 30°C, particularly preferably a temperature of the partially melting and hot drawing step - 50°C. To be specific, the second-stage drawing can be carried out at 130°C or lower, more preferably 100°C or lower, particularly preferably 50°C or lower. A lower limit of the drawing temperature is not particularly limited, but the drawing can be usually carried out at - 180°C or higher for the economical viewpoint. The second-stage drawing can be carried out even at room temperatures. The second-stage drawing can be carried out for preferably 1 to 3 minutes, more preferably 2 to 3 minutes. The second-stage drawing is desirably carried out slowly at low temperatures. Further, the second-stage drawing may be carried out in one direction (uniaxial orientation) or in two directions (biaxial orientation), but the film is suitably drawn in one direction in the present invention.

A draw ratio is 1.1-fold or more, preferably 1.25-fold or more, and particularly preferably 1.5-fold or more. Such two-stage drawing can further enhance a breaking strength of a drawn film obtained through the first-stage drawing while maintaining an elongation to break. Too small a draw ratio is not preferable because a sufficient ratio of PHA molecular chains does not change from a two-fold helical structure (hereinafter also referred to as "α-chain structure") to a planar zigzag structure (hereinafter also referred to as "β-chain structure" or "extended-chain structure") and a strength of the film is thus reduced. Too large a draw ratio causes breaking of the film.

### (iii) Heat treatment step

The process of the present invention may include a heat treatment step after the second-stage drawing step. A heat treatment temperature is preferably 60 to 170°C, more preferably 70 to 130°C. Heat treatment is preferably carried out on a film under tension for suppressing shrinkage or deformation thereof. To be specific, a second-stage drawn film obtained in a state fixed on a jig such as a drawing machine in the second-stage drawing step is subjected to heat treatment in air as it is in the fixed state. Aheat treatment time is preferably 20 minutes to 2 hours. Such heat treatment can further enhance a breaking strength of the two-stage drawn film while maintaining an elongation to break.

### (2) Film of the present invention

The film of the present invention is a film made of PHAs (polyhydroxyalkanoic acids), preferably PHB (poly(3-hydroxybutanoic acid)) having a number molecular weight of 500,000 or more, which has a breaking strength of 280 MPa or more and an elongation to break of 25% or more.

The present invention can provide a film made of PHAs having comparable or better physical properties than those of a conventional, general polymer.

The term "breaking strength" as used herein refers to a value measured in accordance with JIS-K-6301. The film of the present invention has a breaking strength of 280 MPa or more, preferably 300 MPa or more. The term "elongation to break" as used herein refers to a value measured in accordance with JIS-K-6301. The film of the present invention has an elongation to break of 25% or more, preferably 50% or more.

Further, the film of the present invention has comparable or better flexibility than that of a general polymer for a conventional film. That is, the filmof the present invention has a Young's modulus of preferably 3 GPa or less, more preferably 0.5 to 2 GPa.

A film having such physical properties can be obtained following the above-mentioned production process involving, for example: partially melting and hot drawing a film of high molecular weight PHAs each having a number average molecular weight of 500, 000 or more; and subjecting the film to second-stage drawing. PHAs each having a number average molecular weight of 500,000 or more can be obtained through the above-mentioned fermentation synthesis or the like, for example.

The film of the present invention is an oriented crystalline film in which the orientation of a crystalline portion of the PHA film is in one direction. Further, the film of the present invention is a PHA film in which part of molecular chains of PHAs has a planar zigzag structure (β-structure).

According to the present invention, an oriented crystalline film can be obtained by partially melting and hot drawing the unoriented film of PHAs having a specified high molecular weight or more. PHA molecules in the PHA film each have a two-fold helical structure (α-structure). By further drawing the hot-drawn film, a molecular structure of part of PHAs in the hot-drawn PHA film converts from a two-fold helical structure to a planar zigzag structure (β-structure), to thereby provide a film in which part of molecular chains of PHAs in the PHA film has a planar zigzag structure.

The present invention provides an oriented crystalline film by drawing PHAs, to thereby enhance a strength of the film. Further, the oriented crystalline film may be subjected to second-stage drawing, to thereby further enhance the strength of the film.

A crystallinity of the film of the present invention is preferably 75% or more.

The phase "part of molecular chains of polyhydroxyalkanoic acid has a planar zigzag structure" as used herein specifically refers that molecular chains in preferably 5% or more, more preferably 10% or more of the total area of a film each have a planar zigzag structure (β-structure) when the film of the present invention is measured through X-ray diffraction or the like.

A repeated length of a PHA molecular chain in the film of the present invention along a fiber axis is about 0.596 nm for a two-fold helical structure (α-structure) and about 0.920 nm for a planar zigzag structure (β-structure).

The crystallinity and the structure of the PHA molecular chain in the film can be measured through a process such as X-ray diffraction.

The film of the present invention has sufficient strength and flexibility as described above and is made of PHB which are excellent in biodegradability and biocompatibility. Thus, the film of the present invention is useful for medical equipment, packaging materials for food or the like, agricultural plastic sheets, pots for plants, construction sheets, etc.

### Examples

Hereinafter, examples of the present invention will be described.

### <Comparative Example 1, Examples 1 to 3>

Genetically modified Escherichia coli XL1-Blue (pSYL105) was prepared and cultured following a process described in JP 10-176070 A, to thereby obtain PHB from microbial cells. The number average molecular weight of the obtained PHB was measured following a method described in JP 10-176070A, and PHB having a number average molecular weight of 4, 500, 000 was used for the experiments (Comparative Example 1, Examples 1 to 3).

The above PHB was subjected to solvent casting (solvent: chloroform, concentration: 1.0 wt/vol%), to thereby form a film having a thickness of 100 µm. The film was then cut into a size of 10 mm × 30 mm to prepare a sample film. One end of the sample film was loaded with a weight to a draw ratio of 900%, and the film was immersed in a silicone oil bath at 160°C for 1 to 3 seconds.

The sample film was softened immediately after the immersion in the oil bath, and was drawn by the weight. The thus-obtained drawn film was quickly taken out of the oil bath.

The films of Examples 1 to 3 were each further fixed onto a drawing machine and were subjected to second-stage drawing at room temperature (25°C) for 1 to 3 minutes. Table 1 shows second-stage draw ratios.

The obtained drawn films were subjected to heat treatment while being fixed on the drawingmachine. The films of Comparative Example 1 and Examples 1 to 3 were subjected to heat treatment while being fixed on the drawing machine in air at 100°C for 2 hours.

The obtained drawn films were measured for breaking strength, elongation to break, and Young's modulus. Table 1 shows the results. The breaking strength, the elongation to break, and the Young's modulus were measured in accordance with JIS-K-6301 using a tensile compression test machine (SV-200 Model, manufactured by Imada Seisakusho Co., Ltd.). The samples used each had a dumbbell shape of size 4 in accordance with JIS-K-6301, and a tension speed was set to 20 mm/min.

The results show that the process of the present invention provides PHB films each having excellent physical properties such as a high breaking strength and a high elongation to break.

**Table 1**

| Second-stage draw ratio of 9-fold hot-drawn film and physical properties thereof | | | | | | |
|---|---|---|---|---|---|---|
| | Hot draw ratio^{*1} (%) | Second-stage draw ratio (%)^{*2} | Heat treatment temp. (°C) | Breaking strength (MPa) | Elongation to break (%) | Young's modulus (GPa) |
| Comparative Example 1 | 900 | - | 100 | 207 | 122 | 1.90 |
| Example 1 | 900 | 125 | 100 | 235 | 85 | 1.49 |
| Example 2 | 900 | 150 | 100 | 247 | 63 | 1.75 |
| Example 3 | 900 | 175 | 100 | 327 | 35 | 2.01 |

| | | | | | | |
|---|---|---|---|---|---|---|
| *1 Hot-drawing temperature: drawing under tension in a silicone oil bath at 160°C | | | | | | |
| *2 Second-stage drawing temperature: drawing by using a drawing machine at 25°C | | | | | | |

### <Comparative Example 2, Examples 4 and 5>

Genetically modified Escherichia coli XL1-Blue (pSYL105) was prepared and cultured following a process described in JP 10-176070 A, to thereby obtain PHB from the microbial cells. The number average molecular weight of the obtained PHB was measured following a process described in JP 10-176070 A, and PHB having a number average molecular weight of 4,500,000 was used for the experiments (Examples 4 to 5).

A film of Comparative Example 2 was prepared in the same manner as that in Comparative Example 1 except that a draw ratio of the first-stage drawing was changed to 1,000%. Films of Examples 4 and 5 were prepared in the same manner as those in Examples 1 to 3 except that a draw ratio of the first-stage drawing was changed to 1,000%. Table 2 shows the second-stage draw ratios.

The obtained films were measured for breaking strength, elongation to break, and Young's modulus in the same manner as those in Comparative Example 1 and Examples 1 to 3. Table 2 shows the results.

The results show that the process of the present invention provides PHB films each having excellent physical properties such as a high breaking strength and a high elongation to break.

Fig. 1A shows a schematic diagram of a molecular structure of a film in Comparative Example 2 and an X-ray photograph of the film, and Fig. 1B shows a schematic diagram of a molecular structure of part of a film in Example 5 and an X-ray photograph of the film.

The film exhibited enhanced strength through two-stage drawing causing a change in part of molecular chains from a structure in Fig. 1A to a structure in Fig. 1B.

**Table 2**

| Second-stage draw ratio of 10-fold hot-drawn film and physical properties thereof | | | | | | |
|---|---|---|---|---|---|---|
| | Hot draw ratio^{*1} (%) | Second-stage draw ratio^{*2} (%) | Heat treatment temp. (°C) | Breaking strength (MPa) | Elongation to break (%) | Young's modulus (GPa) |
| Comparative Example 2 | 1000 | - | 100 | 277 | 84 | 2.26 |
| Example 4 | 1000 | 125 | 100 | 332 | 83 | 2.73 |
| Example 5 | 1000 | 150 | 100 | 388 | 25 | 2.94 |

| | | | | | | |
|---|---|---|---|---|---|---|
| *1 Hot-drawing temperature: drawing under tension in a silicone oil bath at 160°C | | | | | | |
| *2 Second-stage drawing temperature: drawing by using a drawing machine at 25°C | | | | | | |

### Industrial Applicability

The present invention can easily provide a PHA film having sufficient strength and flexibility, and having biodegradability and biocompatibility with good reproducibility.

## Claims

1. A process for producing a film of polyhydroxyalkanoic acid, comprising: partially melting and hot drawing an unoriented polyhydroxyalkanoic acid film; and further drawing the obtained hot-drawn film to obtain a two-stage drawn film.

2. A process for producing a film of polyhydroxyalkanoic acid according to claim 1, wherein the partially melting and hot drawing is carried out at a temperature from a melting point - 25°C of polyhydroxyalkanoic acid or more to the melting point of polyhydroxyalkanoic acid or less, and at a draw ratio of 2-fold or more.

3. A process for producing a film of polyhydroxyalkanoic acid according to claim 1 or 2, wherein the drawing in the second-stage is carried out at a temperature of the partially melting and hot drawing step or less.

4. A process for producing a film of polyhydroxyalkanoic acid according to any one of claims 1 to 3, wherein the drawing in the second-stage is carried out at a temperature of the partially melting and hot drawing step - 30°C or lower.

5. A process for producing a film of polyhydroxyalkanoic acid according to any one of claims 1 to 4, wherein the drawing in the second-stage is carried out at a draw ratio of 1.25-fold or more.

6. A process for producing a film of polyhydroxyalkanoic acid according to any one of claims 1 to 5, further comprising subjecting the two-stage drawn film to heat treatment at 60 to 170°C.

7. A process for producing a film of polyhydroxyalkanoic acid according to anyone of claims 1 to 6, wherein the polyhydroxyalkanoic acid is poly(3-hydroxybutanoic acid).

8. A process for producing a film of polyhydroxyalkanoic acid according to claim 7, wherein the poly(3-hydroxybutanoic acid) has a number average molecular weight of 500,000 or more.

9. A film produced through the process for producing a film of polyhydroxyalkanoic acid according to any one of claims 1 to 8 and made of polyhydroxyalkanoic acid having a number average molecular weight of 500,000 or more, the film having a breaking strength of 280 MPa or more and an elongation to break of 25% or more.

10. A film according to claim 9, wherein the polyhydroxyalkanoic acid is oriented in one direction in the film and part of molecular chains of the polyhydroxyalkanoic acid has a planar zigzag structure.
